**Europäisches Patentamt**

**European Patent Office**

**Office européen des brevets**

(19)

(11) Publication number: **0 195 154**
**B1**

(12) # EUROPEAN PATENT SPECIFICATION

(45) Date of publication of patent specification: **27.12.89**

(51) Int. Cl.⁴: **G 21 C 3/06, B 32 B 15/01**

(21) Application number: **85306273.5**

(22) Date of filing: **04.09.85**

(54) Water reactor fuel cladding tubes.

(30) Priority: **08.03.85 US 709865**

(43) Date of publication of application:
**24.09.86 Bulletin 86/39**

(45) Publication of the grant of the patent:
**27.12.89 Bulletin 89/52**

(84) Designated Contracting States:
**BE DE FR GB IT**

(56) References cited:
**EP-A-0 121 204**
**DE-A-1 589 458**
**DE-A-3 310 054**
**GB-A-2 119 559**
**US-A-3 620 691**

(73) Proprietor: **WESTINGHOUSE ELECTRIC CORPORATION**
**Westinghouse Building Gateway Center**
**Pittsburgh Pennsylvania 15235 (US)**

(72) Inventor: **Foster, John Paul**
**200 Londonderry Court**
**Monroeville Pennsylvania (US)**
Inventor: **McDonald, Samuel Gilbert, III**
**1339 Foxboro Drive**
**Monroeville Pennsylvania (US)**

(74) Representative: **van Berlyn, Ronald Gilbert et al**
**23, Centre Heights**
**London, NW3 6JG (GB)**

# EP 0 195 154 B1

## Description

This invention relates to zirconium base alloy fuel cladding tubes for use in pressurized water and boiling water reactors. It is especially concerned with having properties which minimize the adverse effects of pellet-clad interaction (PCI) in water reactor fuel elements.

The use of cladding tubes made entirely of a high zirconium alloy has been the practice in the water reactor industry. Examples of common alloys used are Zircaloy-2 and Zircaloy-4. These alloys were selected based on their nuclear properties, mechanical properties, and high-temperature aqueous corrosion resistance.

The history of the development of Zircaloy-2 and 4, and the abandonment of Zircaloy-1 and 3, is summarized in: Stanley Kass, "The Development of the Zircaloys", published in ASTM Special Technical Publication No. 368 (1964) pp. 3—27. Also of interest with respect to Zircaloy development are U.S. Patent Specification Nos. 2,772,964; 3,097,094; and 3,148,055.

Most commercial chemistry specifications for Zircaloy-2 and 4 conform essentially with the requirements published in ASTM B350-80, (for alloy UNS No. R60802 and R60804, respectively) for example. In addition to these requirements, the oxygen content for these alloys is required to be between 900 to 1600 ppm but typically is about 1200 ± 200 ppm for fuel cladding applications.

It has been a common practice to manufacture Zircaloy cladding tubes by a fabrication process involving: hot working an ingot to an intermediate size billet or log; beta solution treating the billet; machining a hollow billet; high temperature alpha extruding the hollow billet to a hollow cylindrical extrusion; and then reducing the extrusion to substantially final size cladding through a number of cold pilger reduction passes, having an alpha recrystallization anneal prior to each pass. The cold worked, substantially final size cladding is then final annealed. This final anneal may be a stress relief anneal, partial recrystallization anneal or full recrystallization anneal. The type of final anneal provided is selected based on the designer's specification for the mechanical properties of the fuel cladding.

One problem that has occurred in the use of fuel rods utilizing the aforementioned cladding has been the observation of cracks emanating from the interior surface of the cladding which is placed under additional stress by contact with a fractured, thermally expanding oxide fuel pellet. These cracks sometimes propagate through the wall thickness of the cladding destroying the integrity of the fuel rod and thereby allowing coolant into the rod and radioactive fission products to contaminate primary coolant circulating through the reactor core. This cracking phenomena is generally believed to be caused by the interaction of irradiation hardening, mechanical stress, and fission products, producing an environment conducive to crack initiation and propagation in zirconium alloys.

Zircaloy fuel cladding tubes having a zirconium layer bonded to their inside surface has been proposed as being resistant to the propagation of cracks initiated at the interface between the fuel pellet and cladding during water reactor operation. Examples of these proposals are provided by United States Patent Specification Nos. 4,045,288; 4,372,817; 4,200,492; and 4,390,497; and GB—A—2,104,711A.

The zirconium liners of the foregoing patents have been selected because of their resistance to PCI crack propagation without consideration of their resistance to aqueous corrosion. If the cladding should reach in the reactor, allowing coolant inside the cladding, it is expected that the aqueous corrosion resistance of the liner will be vastly inferior to that of the high zirconium alloy making up the bulk of the cladding. Under these conditions the liner would be expected to completely oxidize, thereby becoming useless, relatively rapidly, while leading to increase hydride formation in the zirconium alloy portion of the cladding, thereby compromising the structural integrity of the zirconium alloy. This degradation of the cladding could lead to gross failure with significantly higher release of uranium and radioactive species to the coolant.

The art has sought to address this aqueous corrosion resistance problem by buying the zirconium layer of the aforementioned patents between layers of conventional zirconium alloys having high aqueous corrosion resistance or by substituting a dilute zirconium alloy for the internally exposed zirconium layer. Examples of these designs are described in GB—A—2,119,559. Despite these efforts there continues to be a need for water reactor fuel cladding having the excellent aqueous corrosion resistance of conventional zirconium alloys on both its inside diameter and outside diameter surfaces, while having improved PCI crack propagation resistance compared to the conventional Zircaloy-2 and Zircaloy-4 fuel claddings.

Accordingly, the present invention resides in a water reactor fuel cladding tube comprising an outer cylindrical layer of a first zirconium alloy having high strength and excellent aqueous corrosion resistance selected from Zircaloy-2 and Zircaloy-4; and an inner cylindrical layer of a second zirconium alloy metallurgically bonded to said outer cylindrical layer, characterized in that said inner layer consists essentially of either (X) 0.19 to 0.6 wt% tin, and 0.19 to 0.5 wt% iron, or (Y) 0.4 to 0.6 wt% tin, 0.1 to 0.3 wt% iron and, 0.1 to 0.3 wt% nickel; plus 100 to 700 ppm oxygen, with the balance zirconium.

Tubular fuel cladding tubes of the present invention exhibit a significant improvement in PCI crack propagation resistance compared to conventional cladding made entirely of Zircaloy-4 or Zircaloy-2. The second zirconium alloy is thus selected from alloys having the compositions shown in Table I.

## TABLE I

| | X | Y |
|---|---|---|
| Sn | 0.19—0.6 wt% | 0.4—0.6 wt% |
| Fe | 0.19—0.5 wt% | 0.1—0.3 wt% |
| Ni | impurity | 0.1—0.3 wt% |
| O | 100—700 ppm | 100—700 ppm |
| Zr | Balance* | Balance* |

\* Except for impurities (including oxygen and nickel) whose sum is less than 2000 ppm.

Within Alloy X are two preferred compositions as follows;

Alloy X1 containing 0.19 to 0.3 wt% tin, and 0.19 to 0.3 wt% iron; and Alloy X2 containing 0.4 to 0.6 wt% tin, and 0.3 to 0.5 wt% iron.

Preferably the oxygen content of the above alloys is from 100 to 500 ppm.

Also in accordance with the present invention, the inside and outside diameter surfaces of the fuel cladding tube are preferably characterized by essentially black and adherent oxide films after 24 hours exposure to a 500°C, 10330 kPa (1500 psi) steam test.

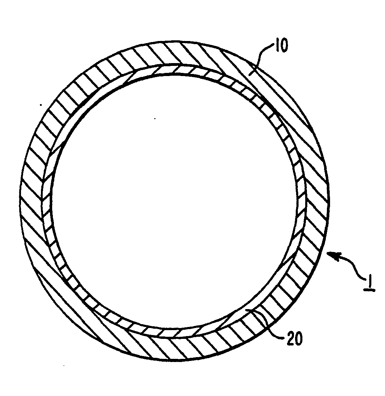

In order that the invention can be more clearly understood, convenient embodiments thereof will now be described, by way of example, with reference to the accompanying drawing which is a transverse cross section through an elongate fuel cladding tube in accordance with the present invention.

Referring to the drawing, a composite fuel cladding tube 1 is provided having two concentric layers, each composed of a different zirconium base alloy. The outer layer 10 is composed of a conventional high strength zirconium base alloy known for its excellent corrosion resistance in aqueous environments. This first alloy may be either Zircaloy-2 or Zircaloy-4, for example. The Zircaloy-2 or 4 utilized preferably conforms to the chemistry specification published in ASTM B350—80 Table 1 for UNS 60802 (Zircaloy-2) or UNS 60804 (Zircaloy-4). In addition the oxygen content of these alloys should be between 900 and 1600 ppm.

Metallurgically bonded to, and located within, the outer layer 10 is a second cylindrical layer 20 having one of the compositions shown in Table I. The inner layer has been provided to give the fuel cladding tube improved resistance to the propagation of PCI related cracks in pile. The alloys selected for this layer have minimal amounts of tin and iron (and nickel in the case of alloy Y) in order to assure that the aqueous corrosion resistance of the inner layer is at least substantially the same as the corrosion resistance of the Zircaloy-2 or 4 outer layer. The upper limits provided on these alloying elements assures that the inner layer material maintains sufficient ductility during in pile usage to stop the propagation of PCI related cracks. Alloy X1 is preferred over Alloy X2 and Alloy Y because it has the lowest content of alloying elements, but yet has excellent corrosion resistance.

The oxygen content of the second layer alloy is between 100 and 700 ppm. As oxygen increases, the hardness of the inner layer alloy increases and is believed to adversely affect the ability of the layer to resist PCI crack propagation in pile. Oxygen is therefore kept below about 700 ppm and more preferably 500 ppm. The lower limit in oxygen content has been selected on the basis that any further improvement in PCI performance obtained by decreasing the oxygen further is believed to be limited and therefore cannot be justified in view of the significant additional costs involved in reducing oxygen below 100 ppm.

While it has been noted the total impurities in the inner layer are maintained below 2000 ppm, it is preferred that they be below 1500 ppm and that individual impurity contents be within the maximum levels specified by ASTM B350—80 Table 1 UNS R60001 where applicable. ASTM B350—80, in its entirety, is hereby incorporated by reference. Electron beam melting of the zirconium starting material to be used in making the inner layer alloy, may be performed to reduce total impurity content.

The thickness of the inner layer 20 is less than the thickness of the outer layer 10, and is preferably about 0,0508—0,1524 mm (0.002 to about 0.006 inch) and more preferably about 0,0762—0,127 mm (0.003—0.005 inch). The outer layer 10 forms the bulk of the cladding and provides the cladding with its mechanical properties. The required thickness of this outer layer may thus be determined by conventional procedures used by those of ordinary skill in the art of nuclear fuel element design. Complete metallurgical bonding between the inner and outer layers is preferably obtained by an elevated temperature coextrusion step.

The coextrusion is then reduced to final size using known cold pilgering and annealing processes utilized to fabricate cladding tubes made completely of Zircaloy. Conventional Zircaloy lubricants, cleaning, straightening, and surface finishing techniques may be used in conjunction with any of the processes, both conventional and new, described in copending application United States Patent Application Serial Nos. 343,788 and 343,787, both filed on January 29, 1982, and in U.S. Patent No. 4,450,016. All of the foregoing

**EP 0 195 154 B1**

fabrication processes will result in complete and continuous metallurgical bonding of the layers, except for minor, insignificant areas of unavoidable bond-line contamination.

Beta treatment, either by laser or induction heating, while not required to practice the present invention, is preferred. When used, such treatment would be performed either between the next to last and last cold pilgering passes preferably as a surface treatment (as described in US—A Patent Application Serial No. 343,788) or just prior to the next to last cold pilger pass preferably as a through wall beta treatment. After beta treatment, all intermediate, as well as the final anneals, should preferably be performed below about 600°C and more preferably at or below about 550°C. These low temperature anneals are used to preserve the enhanced corrosion resistance imparted by the beta treatment.

Most preferably, the aqueous corrosion resistance of the outer layer and inner layer are characterized by a grey or substantially black, adherent corrosion film and a weight gain of less than about 200 mg/dm², and more preferably less than about 100 mg/dm² after a 24-hour, 500°C, 10330 KPa (1500 psi) steam test.

Whether or not surface beta treatment has been used, the final anneal, after the final cold pilgering pass, may be one in which the zirconium alloy inner layer is stress relieved (i.e. without significant recrystallization), partially recrystallized, or fully recrystallized. Where a full recrystallization final anneal is performed, the resulting average grain size is no larger than about 1/4, and more preferably from 1/10 to 1/30, the inner layer wall thickness. The Zircaloy outer layer has been at least stress relief annealed. After the final anneal, conventional Zircaloy tube cleaning, straightening, and finishing steps are performed.

The invention will be further clarified by the following example which is intended to be purely exemplary of the present invention.

An alloy having the ingot composition shown in Table II was melted by consumable electrode vacuum arc melting the required alloying additions with commercially available zirconium. Arc melting was performed twice.

It should be understood that the cladding chemistry requirements set forth in this application may be met by performing chemical analyses at the ingot stage of manufacture for alloying elements and impurities, and subsequently, at an intermediate stage of manufacture, such as near the coextrusion stage, for the interstitial elements, oxygen, hydrogen, and nitrogen. Chemical analysis of the final size cladding is not required.

4

TABLE II

Composition of Inner Layer Ingot*

| | |
|---|---|
| Sn | 0.19—0.20 w/o |
| Fe | 0.19 w/o |
| Al | 74—70 ppm |
| B | 0.2 ppm |
| Cd | <0.2 ppm |
| C | 80—90 ppm |
| Cl | 12—16 ppm |
| Co | <10 ppm |
| Cu | <25 ppm |
| Cr | <100 ppm |
| Hf | 38—35 ppm |
| Mn | <25 ppm |
| Mo | <25 ppm |
| Ni | <25 ppm |
| N | 21—22 ppm |
| O | 615—721 ppm |
| Si | 56—49 ppm |
| Ti | <25 ppm |
| W | <50 ppm |
| U | 1.3—1.5 ppm |

\* All results based on two analyses, one at the top and one at
the bottom of the ingot. Where no range is shown, analyses
at top and bottom were identical.

The resulting ingot was about 20,32 cm (8 inches) in diameter by about 106,68 cm (42 inches) in length. The ingot was machined to a cylindrical hollow having an outside diameter of about 19,56cm (7.7 inches) and an inside diameter of about 4,19 cm (1.65 inches). The hollow was then heated to about 538°C (1000°F) and immediately extruded to a tube hollow having an outside diameter of about 7,62 cm (3 inches) and an inside diameter of about 4,19 cm (1.65 inches). This hollow was then used to form the inner layer starting component. While not used in this example, it is preferred that the inner layer starting material receive a beta solution treatment, preferably prior to coextrusion.

A tubular Zircaloy-2 starting component for the outer layer was then fabricated from a triple arc melted (vacuum consumable electrode) 76,68 cm (26 inch) diameter ingot having the alloying element chemistry shown in Table III. The ingot was fabricated by conventional forging to a 17,78 cm (7 inch) diameter round and then beta solution treated. The 17,78 cm (7 inch) round was then machined to a hollow cylinder having an outside diameter of about 17,018 cm (6.7 inches) and an inside diameter of about 7,366 cm (2.9 inches).

# EP 0 195 154 B1

## TABLE III

### Zircaloy-2 Ingot Alloy Analysis

| | (weight percent) |
|---|---|
| SN | 1.52—1.60 |
| Fe | 0.15—0.16 |
| Cr | 0.10—0.11 |
| Ni | 0.05—0.06 |
| Fe+Cr+Ni | 0.30—0.33 |
| O | 0.107—0.121 |
| Zr | Balance except for impurities |

The inside diameter of the outer layer starting component and outside diameter surface of the inner layer starting component were machined as needed to provide a close fit between the components when nested inside of each other. After machining, the components were cleaned and pickled to remove surface contamination from the surfaces to be bonded. The components were then nested inside of each other and the annulus formed at the interface of the adjacent components is vacuum electron beam welded shut, such that a vacuum is maintained in the annulus after welding both ends of the nested components. At this stage, the unbonded tube shell assembly was heated to about 593°C (1100°F) and extruded to a tube shell having about a 6,35 cm (2.5 inch) outside diameter and a wall thickness of about 1,092 cm (0.43 inch). The inside diameter was then honed, the outside diameter grit blasted. The tube shell was then cleaned and pickled, vacuum annealed for 2 to 3 hours at about 675°C, and then recleaned and pickled.

In the preceding manner three coextruded tube shells were produced from the two starting ingots. The results of chemical analyses performed on the coextruded tube shells are shown in Table IV.

## TABLE IV

### Coextrusion Chemistry

| Coextrusion | A | B | C |
|---|---|---|---|
| Inner Layer N | 38 | 19 | 27 |
| Inner Layer O | 586 | 629 | 698 |
| Outer Layer H | <12 | <12 | <12 |
| Outer Layer N | 45 | 54 | 53 |
| Outer Layer O | 1120 | 1210 | 1120 |

Coextrusion A was then reduced by cold pilgering according to the following schedule:

Step 1: Cold pilger to 4,19 cm (1.65 inch) outside diameter and 0,762 cm (0.30 inch) wall thickness.

Step 2: Vacuum anneal at about 676,6°C (1250°F) for about 3.5 hours at temperature.

Step 3: Cold pilger to 2,54 cm (1.0 inch) outside diameter and 0,406 cm (0.16 inch) wall thickness.

Step 4: Induction through wall beta quench using a water spray quench.

Step 5: Cold pilger to 1,651 cm (0.65 inch) outside diameter and 0.0075 inch wall thickness.

6

EP 0 195 154 B1

Step 6: Vacuum anneal at about 678,9°C (1200°F) for about 33.5 hours at temperature.

Step 7: Cold pilger to about 1,224 cm (0.482) outside diameter and about 0,6787 cm (0.031 inch) wall thickness.

Step 8: Final anneal.

Samples of the tubing produced by step 7 were final annealed in step 8 according to one of the three following schedules: 8.1, 8.2 or 8.3.

8.1   Final vacuum anneal at about 593°C (1100°F) for about 5 hours at temperature. This treatment fully recrystallized both the outer and inner layers and produced a grain size in the inner layer estimated to be about ASTM grain size number 11 (i.e. approximately 0,000762 cm (0.0003 inches) in diameter).

8.2   Final vacuum anneal at about 481,74°C (900°F) for 5 hours at temperature. This treatment produced a fully recrystallized inner layer and a stress relieved (i.e. no recrystallization evident by optical metallographic examination) outer layer. The inner layer had a Knoop Hardness number of about 160 KHN (100 gm. load) and an ASTM grain size number of about 11.7 (i.e. approximately 0,00061 cm (0.00024 inches) in diameter).

8.3   Final vacuum anneal at about 470,64°C (880°F) for about 5 hours at temperature. This treatment partially recrystallized the inner layer and stress relieved the outer layer. The inner layer had a hardness of about 190 KHN (100 gm. load) and was roughly estimated to be about 75% recrystallized based on optical metallography.

Interspersed through the above fabrication procedures are conventional cleaning and pickling steps as needed to remove surface contamination and maintain surface quality. The final inner layer thickness will be about 0,00762 cm (0.003 inches) after final pickling.

The finished lined cladding according to the present invention is then loaded with fissile fuel material. Preferably the fuel material used is in the form of cylindrical pellets, and may have chamfered edges and/or concavedly dished ends. Preferably these pellets are mainly composed of $UO_2$ and are about 95% dense. The uranium in these pellets may be enriched or natural. These pellets may also contain a burnable absorber such as gadolinia or a boron compound. The resulting fuel element may be one of any of the known pressurized water or boiling water reactor designs, preferably with a standard pressurized helium atmosphere inside of the hermetically sealed cladding.

## Claims

1. A water reactor fuel cladding tube comprising an outer cylindrical layer of a first zirconium alloy having high strength and excellent aqueous corrosion resistance selected from Zircaloy-2 and Zircaloy-4; and an inner cylindrical layer of a second zirconium alloy metallurgically bonded to said outer cylindrical layer, characterized in that said inner layer consists essentially of either (X) 0.19 to 0.6 wt% tin, and 0.19 to 0.5 wt% iron, or (Y) 0.4 to 0.6 wt% tin, 0.1 to 0.3 wt% iron and, 0.1 to 0.3 wt% nickel; plus 100 to 700 ppm oxygen, with the balance zirconium.

2. A cladding tube according to claim 1, wherein the second zirconium alloy contains 0.19 to 0.3 wt% tin, and 0.19 to 0.3 wt% iron.

3. A cladding tube according to claim 1, characterized in that the second zirconium alloy contains 0.4 to 0.6 wt% tin, and 0.3 to 0.5 wt% iron.

4. A cladding tube according to claim 1, 2 or 3, characterized in that said tube has a corrosion resistance characterized by a weight gain of less than 200 mg/dm² and essentially black and adherent oxide films on the inner and outer layers after a 24-hour exposure to a 500°C steam test.

5. A cladding tube according to claim 2, 3 or 4, characterized in that the oxygen content of the second zirconium alloy is from 100 to 500 ppm.

6. A cladding tube according to any of claims 1 to 5, characterized in that the second zirconium alloy is characterized by a stress relieved microstructure.

## Patentansprüche

1. Ein Wasser-Reaktor-Brennstoffummantelungsrohr, das eine äußere zylindrische Schicht aus einer ersten Zirkonlegierung, die hohe Festigkeit und ausgezeichnete Wasserkorrosionswiderstandsfähigkeit besitzt, ausgewählt aus Zircaloy-2 und Zircaloy-4; und eine innere zylindrische Schicht aus einer zweiten Zirkonlegierung umfaßt, die metallurgisch an die genannte äußere zylindrische Schicht gebunden ist, dadurch gekennzeichnet, daß die innere Schicht aus im wesentlichen entweder (X) 0,19 bis 0,6 Gew% Zinn und 0,19 bis 0,5 Gew% Eisen oder (Y) 0,4 bis 0,6 Gew% Zinn, 0,1 bis 0,3 Gew% Eisen und 0,1 bis 0,3 Gew% Nickel besteht; plus 100 bis 700 ppm Sauerstoff, wobei der Rest aus Zirkon besteht.

2. Ein Ummantelungsrohr nach Anspruch 1, wobei die zweite Zirkonlegierung 0,19 bis 0,3 Gew% Zinn und 0,19 bis 0,3 Gew% Eisen enthält.

3. Ein Ummantelungsrohr nach Anspruch 1, dadurch gekennzeichnet, daß die zweite Zirkonlegierung 0,4 bis 0,6 Gew% Zinn und 0,3 bis 0,5 Gew% Eisen enthält.

7

4. Ein Ummantelungsrohr nach Anspruch 1, 2 oder 3, dadurch gekennzeichnet, daß das Rohr eine Korrosionswiderstandsfähigkeit besitzt, die charakterisiert ist durch einen Gewichtsgewinn von weniger als 200 mg/dm$^2$ und durch im wesentlichen schwarze und anhaftende Oxidfilme auf der inneren und äußeren Schicht nach einer 24-stündigen Aussetzung einem 500°C-Dampf-Test.

5. Ein Ummantelungsrohr nach Anspruch 2, 3 oder 4, dadurch gekennzeichnet, daß der Sauerstoffgehalt der zweiten Zirkonlegierung zwischen 100 und 500 ppm liegt.

6. Ein Ummantelungsrohr nach einem der Ansprüche 1 bis 5, dadurch gekennzeichnet, daß die zweite Zirkonlegierung charakterisiert ist durch eine belastungsgelöste Mikrostruktur.

**Revendications**

1. Tube de revêtement de combustible pour réacteur à eau comprenant une couche cylindrique extérieure d'un premier alliage de zirconium présentant une solidité très élevée et une excellente résistance à la corrosion aqueuse, choisi parmi le Zircaloy-2 et le Zircaloy-4; une couche cylindrique intérieure d'un second alliage de zirconium collé métallurgiquement à la couche cylindrique extérieure, tube caractérisé en ce que la couche intérieure est constituée essentiellement soit de (X) 0,19 à 0,6 % en poids d'étain, et 0,19 à 0,5 % en poids de fer, soit de (Y) 0,4 à 0,6 % en poids d'étain, 0,1 à 0,3% en poids de fer et 0,1 à 0,3 % en poids de nickel; plus 100 à 700 ppm d'oxygène, le complément à 100% était constitué par du zirconium.

2. Tube de revêtement selon la revendication 1, caractérisé en ce que le second alliage de zirconium contient de 0,19 à 0,3 % en poids d'étain, et de 0,19 à 0,3 % en poids de fer.

3. Tube de revêtement selon la revendication 1, caractérisé en ce que le second alliage de zirconium contient de 0,4 à 0,6 % en poids d'étain, et de 0,3 à 0,5 % en poids de fer.

4. Tube de revêtement selon l'une quelconque des revendications 1 à 3, caractérisé en ce que ce tube présente une résistance à la corrosion caractérisée par un gain de poids de moins de 200 mg/dm$^2$, et par des films d'oxyde adhérents essentiellement noirs formés sur les couches intérieure et extérieure après 24 heures d'exposition à un test de vapeur à 500°C.

5. Tube de revêtement selon l'une quelconque des revendications 2 à 4, caractérisé en ce que la teneur en oxygène du second alliage de zirconium est comprise entre 100 et 500 ppm.

6. Tube de revêtement selon l'une quelconque des revendications 1 à 5, caractérisé en ce que le second alliage de zirconium est caractérisé par une microstructure de libération de contrainte.